# EUROPÄISCHE PATENTSCHRIFT

(11) **EP 0 775 819 B1**
(45) Veröffentlichungstag und Bekanntmachung des Hinweises auf die Patenterteilung: **02.12.1998**
(21) Anmeldenummer: 96114539.8
(22) Anmeldetag: 11.09.1996
(51) Int. Cl.: F02F 3/00, F16J 1/14

(54) **Kolben für Brennkraftmaschinen**
Piston for an internal combustion engine
Piston pour un moteur à combustion interne

(30) Priorität: 21.11.1995 DE 19543359
(43) Veröffentlichungstag der Anmeldung: 28.05.1997
(73) Patentinhaber: AE GOETZE GmbH, D-51399 Burscheid (DE)
(72) Erfinder: Junge, Klaus, Prof., 51399 Burscheid (DE)

(56) Entgegenhaltungen:
- DE-A- 2 061 707
- DE-A- 3 318 215

## Beschreibung

Die Erfindung betrifft einen Kolben für eine Brennkraftmaschine mit einem Kolbenkopf und einem separaten Kolbenmantel, wobei Kolbenkopf und Kolbenmantel Lagerflächen aufweisen, sowie einem beide Teile miteinander koppelnden Verbindungselement.

Aus dem Stand der Technik sind Kolben für Brennkraftmaschinen zu entnehmen, bei denen der Kolben aus einem Oberteil aus Stahl oder Eisenwerkstoffund einem Unterteil aus einer Aluminiumlegierung besteht. Die DE OS 2 620 910 offenbart einen Kolben mit getrenntem Kolbenkopf und Kolbenmantel. Derartige Kolben werden auch als Pendelschaftkolben bezeichnet. Neben dem Ober- und Unterteil weist der Kolben auch einen Kolbenbolzen auf, der die Verbindung zwischen Ober-, Unterteil und Pleuel übernimmt. Es wird eine gelenkige Verbindung zwischen Ober- und Unterteil erzeugt und somit eine Funktionstrennung am Kolben. Das Oberteil, der Kolbenkopf, übernimmt die Abdichtfunktion gegen die heißen Verbrennungsgase und die Übertragung der Gaskraft auf das Pleuel. Vom Unterteil, der Kolbenmantel, werden nur die vom Kurbeltrieb eingeleiteten Seitenkräfte aufgenommen. Beim vorbekannten Kolben ist die Lagerfläche für das Pleuel im Kolbenkopf angeordnet und einstückig mit diesem verbunden. Am Außenumfang dieser Lagerfläche erstrecken sich Verbindungselemente zum Kolbenmantel, um so Kolbenkopf und Kolbenmantel zu verbinden. Insgesamt besteht der Kolben aus einer Vielzahl von Einzelteilen, die umständlich miteinander verbunden werden müssen. Es müssen auf diese Weise mehrere Einzelteile gefertigt, zusammengestellt, zusammengefügt und miteinander verschraubt werden.

Der Erfindung liegt die Aufgabe zugrunde, einen gattungsgemäßen Kolben im Hinblick auf die Anzahl der Einzelteile zu reduzieren, wobei gleichzeitig eine einfachere Montage der Einzelteile angestrebt wird. Diese Aufgabe wird erfindungsgemäß durch die kennzeichnenden Merkmale des Anspruchs 1 gelöst. Vorteilhafte Ausgestaltungen der Erfindung sind in den Unteransprüchen dargelegt.

Die Erfindung ist anhand eines Ausführungsbeispieles in der Zeichnung dargestellt und wird im folgenden näher erläutert. Es zeigen:
- Figur 1: Ansicht eines erfindungsgemäßen Kolbenkopfes
- Figur 2: Ansicht eines erfindungsgemäßen Kolbenmantels
- Figur 3: Kolben gemäß Figur 1 und 2 in der Seitenansicht mit Pleuel und Haltekörper
- Figur 4: Kolben gemäß Figur 3 in zusammengebautem Zustand

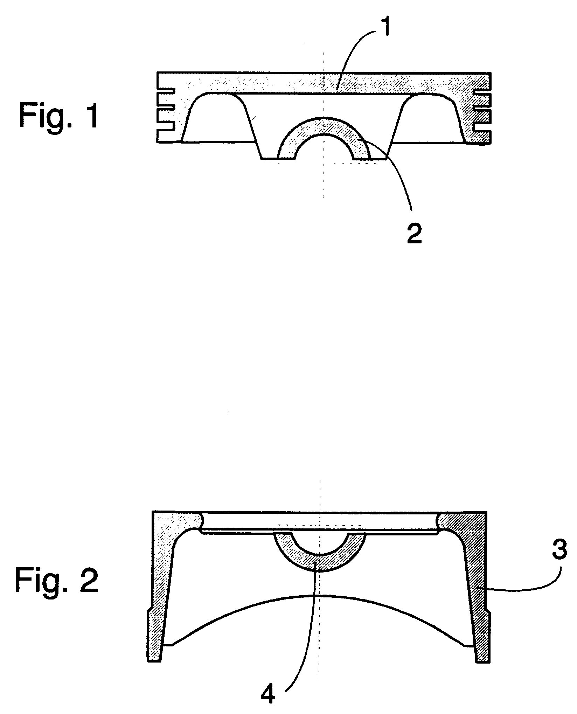

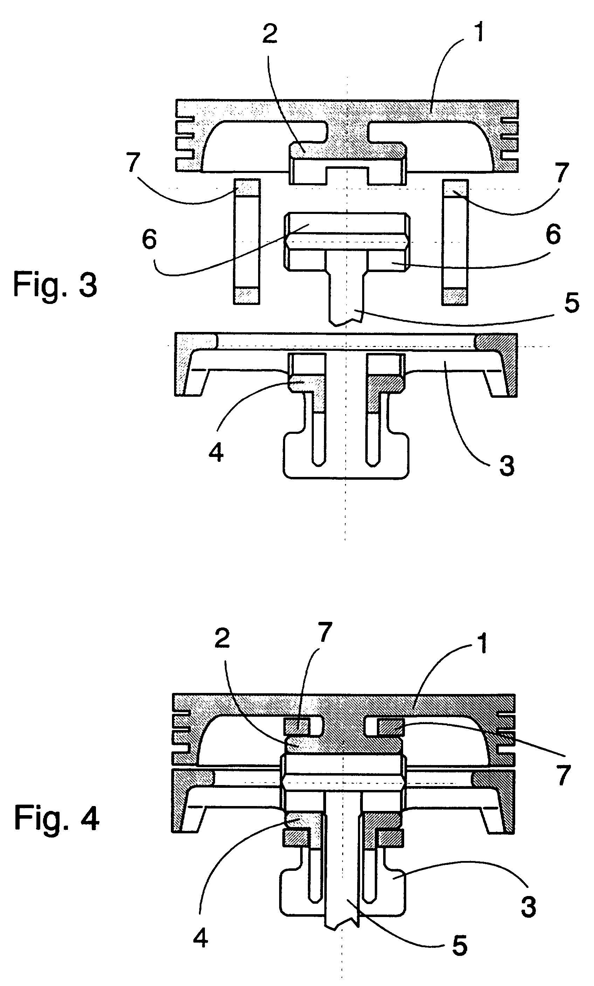

Die Figur 1 zeigt ein aus vorzugsweise Sphäroguß oder anderer Materialien bestehendes Oberteil eines erfindungsgemäßen Kolbens. Dieser Kolbenkopf (1) weist eine als Halbzylinder ausgebildete Lagerfläche (2) für ein Pleuel (nicht dargestellt) auf Der in der Figur 2 dargestellte Kolbenmantel (3) ist aus Aluminium gefertigt. Der Kolbenmantel (3) weist ebenfalls eine als Halbzylinder ausgebildete Lagerfläche (4) auf. Die Verbindung von Kolbenkopf (1) und Kolbenmantel (3) erfolgt über ein spezielles Pleuel (5) (Figur 3), welches einen Kopf aufweist, der aus beidseitig auskragenden Zapfen (6) gebildet ist und Haltekörpern (7). Das Pleuel (5) wird zum Einbau gegen die Lagerfläche (2) gedrückt. Der Kolbenmantel (3) umschließt mit der Lagerfläche (4) den Kopf des Pleuels (5), anschließend werden seitlich die Haltekörper (7) über die äußere Mantelfläche der als Halbzylinder ausgebildeten Lagerflächen (2, 4) geschoben. Die als Ringe ausgebildeten Haltekörper liegen lose auf der Mantelfläche auf und werden durch zusätzliche Sicherungsringe (nicht dargestellt) gehalten. Auf diese Weise können die verbundenen Bauteile sich gegeneinander frei bewegen. Die Figur 4 zeigt den zusammengebauten Kolben, bestehend aus Kolbenkopf (1), Kolbenmantel (3) und Pleuel (5).

## Patentansprüche

1. Kolben für eine Brennkraftmaschine mit einem Kolbenkopf und einem separaten Kolbenmantel, wobei Kolbenkopf und Kolbenmantel Lagerflächen aufweisen, sowie einem beide Teile miteinander koppelnden Verbindungselement, dadurch gekennzeichnet, daß durch Verbinden der diametral gegenüberliegend angeordneten Lagerflächen (2,4) eine Lagerfläche eines Pleuels (5) entsteht.

2. Kolben nach Anspruch 1, dadurch gekennzeichnet, daß die Lagerfläche für das Pleuel (5) als Hohlzylinder ausgebildet ist.

3. Kolben nach Anspruch 1 und 2, dadurch gekennzeichnet, daß die Lagerfläche (2, 4) des Kolbenkopfes (1) und des Kolbenmantels (3) je als Halbzylinder ausgebildet ist, und daß zur Bildung der Lagerfläche für das Pleuel (5) die Halbzylinder mittels eines an einer Mantelfläche angreifenden Haltekörpers (7) verbunden sind.

4. Kolben nach den Ansprüchen 1 bis 3, dadurch gekennzeichnet, daß das Pleuel (5) einen aus von den Lageflächen (2,4) von Kolbenkopf (1) und Kolbenmantel (3) gebildeten Lagefläche für das Pleuel korrespondierenden Kopf aufweist, der aus beiseitig axial auskragenden Zapfen (6) gebildet ist.

5. Kolben nach den Ansprüchen 1 bis 4, dadurch gekennzeichnet, daß der Kolbenmantel (3) aus zwei Segmenten besteht.

## Claims

1. Piston for an internal combustion engine with a piston head and a separate piston skirt, piston head and piston skirt having bearing surfaces as well as a joining element coupling the two parts together, characterised in that, through connecting the diametrically opposite bearing surfaces (2, 4), a bearing surface of a connecting rod (5) is formed.

2. Piston according to claim 1, characterised in that the bearing surface for the connecting rod (5) is configured as a hollow cylinder.

3. Piston according to claim 1 and 2, characterised in that the bearing surfaces (2, 4) of the piston head (1) and piston skirt (3) are each configured as a half cylinder and in that the half cylinders are connected by means of a retaining body (7), acting on a skirt surface, to form the bearing surface for the connecting rod (5).

4. Piston according to claims 1 to 3, characterised in that the connecting rod (5) has a head, which corresponds to the bearing surface for the connecting rod formed from the bearing surfaces (2, 4) of piston head (1) and piston skirt (3) and is formed from journals projecting axially on both sides.

5. Piston according to claims 1 to 4, characterised in that the piston skirt (3) consists of two segments.

## Revendications

1. Piston pour moteur à combustion interne comprenant une tête de piston et une enveloppe de piston séparée, la tête de piston et l'enveloppe de piston comportant des surfaces d'appui, ainsi qu'un élément de liaison couplant les deux pièces ensemble, caractérisé en ce qu'il résulte de la liaison des surfaces d'appui (2, 4) diamétralement opposées, une surface d'appui d'une bielle (5).

2. Piston selon la revendication 1, caractérisé en ce que la surface d'appui pour la bielle (5) est réalisée sous la forme d'un cylindre creux.

3. Piston selon les revendications 1 et 2, caractérisé en ce que les surfaces d'appui (2, 4) de la tête de piston (1) et de l'enveloppe de piston (3) sont chacune réalisées sous la forme d'un demi-cylindre, et en ce que les demi-cylindres sont reliés au moyen d'un corps de retenue (7) en prise sur la surface d'enveloppe pour la formation de la surface d'appui pour la bielle (5).

4. Piston selon les revendications 1 à 3, caractérisé en ce que la bielle (5) comprend une tête correspondant à la surface d'appui pour la bielle formée à partir des surfaces d'appui (2, 4) de la tête de piston (1) et de l'enveloppe de piston (3), ladite tête étant formée de tourillons (6) faisant saillie axialement de chaque côté.

5. Piston selon les revendications 1 à 4, caractérisé en ce que l'enveloppe de piston (3) est constituée de deux segments.
